# EUROPÄISCHE PATENTANMELDUNG

(11) **EP 1 858 134 A2**
(43) Veröffentlichungstag der Anmeldung: **21.11.2007**
(21) Anmeldenummer: 07005235.2
(22) Anmeldetag: 14.03.2007
(51) Int. Cl.: H02J 7/14

(54) **Verfahren und Vorrichtung zum Einstellen einer Sollspannung eines in einem Kraftfahrzeug angeordneten Generators**

(30) Priorität: 18.05.2006 DE 102006023275
(71) Anmelder: Dr.Ing. h.c. F. Porsche Aktiengesellschaft, 70435 Stuttgart (DE)
(72) Erfinder: Biskup, Gregor, 75236 Kämpfelbach Ersingen (DE); Ritter, Bernhard, 75181 Pforzheim (DE); Djordjevic, Dejan, 70435 Stuttgart (DE)

(57) **Zusammenfassung**

Die Erfindung betrifft ein Verfahren eine Vorrichtung (11) zum Einstellen einer Soll-Ausgangsspannung eines in einem Kraftfahrzeug (1) angeordneten Generators (2), wobei die Soll-Ausgangsspannung des Generators (2) abgesenkt wird, sofern sie einen vorgegebenen ersten Schwellwert (B1) überschreitet und ein Ansteuersignal (14) für einen Lüfter (5) zum Kühlen eines Motors des Kraftfahrzeugs (1) einen zweiten Schwellwert (P1) erreicht oder überschreitet.

## Beschreibung

Die vorliegende Erfindung betrifft ein Verfahren und eine Vorrichtung zum Einstellen einer Soll-Ausgangsspannung eines in einem Kraftfahrzeug angeordneten Generators.

Ein Kraftfahrzeug hat üblicherweise einen, auch als Lichtmaschine bezeichneten Generator, der unterschiedliche Aufgaben zu erfüllen hat. Eine Hauptaufgabe des Generators ist das Laden einer Batterie des Kraftfahrzeugs. Die Batterie gibt insbesondere zum Starten des Kraftfahrzeugs eine große Menge an gespeicherter Energie ab. Nach dem Starten soll der Batterie daher wieder Energie zugeführt werden. Dies erfolgt mittels des Generators, der mit der Batterie verbunden ist. Der Generator versorgt die Batterie mit einem Strom, durch den diese wieder aufgeladen wird. Der Generator wird ferner dazu verwendet, andere elektrische Verbraucher des Kraftfahrzeugs mit Strom zu versorgen. Ein solcher Verbraucher ist ein Lüfter, der zum Kühlen eines zum Antreiben des Kraftfahrzeugs benutzten Motors dient. Dem Lüfter ist eine Ansteuereinrichtung zugeordnet, die ein Ansteuersignal zum Ansteuern des Lüfters erzeugt. Eine von dem Generator im Betrieb an seinem Ausgang zu liefernde Ausgangsspannung wird üblicherweise über eine Soll-Ausgangsspannung dem Generator vorgegeben.

Es ist die Aufgabe der vorliegenden Erfindung, einen einwandfreien Betrieb eines Lüfters zum Kühlen eines Motors eines Kraftfahrzeugs auf technisch einfache Weise zu gewährleisten.

Diese Aufgabe wird gemäß der technischen Lehre des Anspruchs 1 oder des Anspruchs 11 gelöst. Erfindungsgemäß wird die Soll-Ausgangsspannung des Generators abgesenkt, sofern sie einen vorgegebenen ersten Schwellwert überschreitet und ein Ansteuersignal für einen Lüfter zum Kühlen eines Motors des Kraftfahrzeugs einen zweiten Schwellwert erreicht oder überschreitet.

Beim Betreiben des Kraftfahrzeugs ist es vorteilhaft, dass der Generator, gegebenenfalls für eine begrenzte Zeitdauer, eine hohe Ausgangsspannung liefert und einen hohen Strom abgibt, mit dem eine Batterie des Kraftfahrzeugs schnell aufgeladen werden kann. Dies ist insbesondere für eine bestimmte Zeitdauer nach einem Starten des Kraftfahrzeugs besonders vorteilhaft, um der Batterie beim Starten verbrauchte Energie schnell zuzuführen. Aufgrund der vorliegenden Erfindung kann vorteilhafterweise vermieden werden, dass eine zum Ansteuern des Lüfters verwendete, elektronische Bauelemente enthaltende Ansteuereinrichtung, die ebenfalls zu ihrer Spannungsversorgung mit dem Ausgang des Generators verbunden ist, bei bestimmten Betriebsbedingungen durch die hohe Ausgangsspannung des Generators beschädigt wird. Der Lüfter ist dabei insbesondere ein motorbetriebener Lüfter, dessen Motor mittels des Ansteuersignals angesteuert wird. Erfindungsgemäß kann eine geeignete Vorgabe der Soll-Ausgangsspannung des Generators ermöglicht werden, um damit einen problemlosen Betrieb des Lüfters zu gewährleisten. Vorteilhafterweise wird die Soll-Ausgangsspannung des Generators auf eine vorgegebene Begrenzungsspannung abgesenkt. Diese kann so bemessen sein, dass der Lüfter seine vorgegebene Soll-Drehzahl während des Absenkens der Soll-Ausgangsspannung erreicht.

In einer vorteilhaften Ausgestaltung der Erfindung wird eine Außentemperatur bestimmt und die Soll-Ausgangsspannung nur abgesenkt, falls die Außentemperatur einen vorgegebenen dritten Schwellwert erreicht oder überschreitet. Mit der Berücksichtigung der außerhalb des Kraftfahrzeugs herrschenden Außentemperatur kann eine noch effektivere Einstellung der Soll-Ausgangsspannung des Generators vorgenommen werden, da ein besonders guter Kompromiss zwischen einem möglichst schnellen Aufladen der Batterie mittels einer hohen Ausgangsspannung des Generators und einem Vermeiden der Beschädigung der Ansteuereinrichtung für den Lüfter erreicht wird. Liegt die Außentemperatur unter dem dritten Schwellwert, so kann davon ausgegangen werden, dass die Außenkühlung so groß ist, dass sie wesentlich zum Kühlen des Motors des Kraftfahrzeugs beiträgt. In diesem Fall muss der Lüfter eine entsprechend geringere Ausgangsleistung erbringen.

Vorzugsweise wird die Soll-Ausgangsspannung nur abgesenkt, falls das Ansteuersignal für den Lüfter bei seinem Ansteigen den zweiten Schwellwert erreicht oder überschreitet. Gerade in einer Anstiegsphase des Ansteuersignals ist die Gefahr der Beschädigung der Ansteuereinrichtung besonders groß, da der Lüfter selbst keinen so hohen Strom benötigt, der zum ausreichenden Begrenzen der Ausgangsspannung des Generators führt.

In einer weiteren vorteilhaften Ausgestaltung wird die Soll-Ausgangsspannung für eine vorgegebene erste Zeitdauer abgesenkt. Diese ist vorteilhafterweise so bemessen, dass davon auszugehen ist, dass nach Ablauf der ersten Zeitdauer die Ausgangsleistung des Lüfters so groß ist, dass er selbst einen genügend hohen Strom zieht, um die Ausgangsspannung des Generators geeignet zu begrenzen. Während der ersten Zeitdauer bleibt die Soll-Ausgangsspannung des Generators vorteilhafterweise unabhängig von dem Verlauf des Ansteuersignals für den Lüfter abgesenkt. Nach Ablauf der ersten Zeitdauer wird die Soll-Ausgangsspannung des Generators somit wieder freigegeben und kann einen Wert annehmen, der über dem ersten Schwellwert liegt. Dabei ist anzumerken, dass die tatsächlich vorhandene Ausgangsspannung von der Soll-Ausgangsspannung des Generators abweichen kann.

In einer besonders bevorzugten Ausgestaltung der Erfindung wird ein Druck eines Kältemittels für eine Klimatisierungseinrichtung des Kraftfahrzeugs bestimmt und die Soll-Ausgangsspannung abgesenkt, sofern der bestimmte Druck einen vorgegebenen vierten Schwellwert erreicht oder überschreitet. Dadurch wird eine zusätzliche Sicherheitsvorkehrung getroffen, da insbesondere bei einer Fehlfunktion des Lüfters oder seiner Ansteuerung bei ungünstigen Bedingungen für die Klimatisierungseinrichtung, beispielsweise bedingt durch eine hohe Systemleistung der Klimatisierungseinrichtung oder eine hohe Außentemperatur, ein schnelles und problematisches Ansteigen des Drucks des Kältemittels auftreten kann. Der Lüfter kann zusätzlich zum Kühlen des Kältemittels eingesetzt werden, so dass sein ordnungsgemäßer Betrieb für das Verhalten des Kältemittels relevant ist. Der hohe Druck des Kältemittels ist ein Anzeichen für eine Fehlfunktion. Insbesondere dann, wenn zunächst nicht genau ersichtlich ist, welcher Fehler vorliegt, ist es vorteilhaft, sicherheitshalber die Soll-Ausgangsspannung des Generators abzusenken.

Bevorzugt wird die Soll-Ausgangsspannung des Generators so lange abgesenkt, bis der Druck des Kältemittels einen vorgegebenen fünften Schwellwert erreicht oder unterschreitet. Der fünfte Schwellwert ist dabei vorteilhafterweise so festgelegt, dass sichergestellt ist, dass der Druck genügend klein ist, um kein Sicherheitsrisiko mehr darzustellen.

Besonders bevorzugt ist der fünfte Schwellwert niedriger, als der vierte Schwellwert. Dadurch ist eine zusätzliche Sicherheit vorhanden, die das System zudem stabiler macht. In das Einstellen des Soll-Ausgangsspannung ist somit eine Art Hysterese implementiert.

In einer vorteilhaften Ausgestaltung wird eine zweite Zeit bestimmt, in der die Soll-Ausgangsspannung in Abhängigkeit von dem bestimmten Druck abgesenkt wird. Das Bestimmen dieser zweiten Zeit kann für weitere Steuerungszwecke eingesetzt werden und führt damit zu einer weiteren Verbesserung des Einstellens der Soll-Ausgangsspannung.

In einer weiteren vorteilhaften Ausgestaltung werden Zeiten, in denen die Soll-Ausgangsspannung des Generators abgesenkt wird, aufsummiert und eine Ladedauer zum Aufladen einer Batterie des Kraftfahrzeugs wird in Abhängigkeit von diesen aufsummierten Zeiten verlängert. Dadurch ist ein genaues Einhalten der Ladebilanz zum Aufladen der Batterie gewährleistet.

Besonders vorteilhaft wird die Soll-Ausgangsspannung des Generators bei ihrem Absenken auf den ersten Schwellwert abgesenkt. Dies gewährleistet ein sicheres und genügend starkes Absenken der Soll-Ausgangsspannung und hält gleichzeitig den Implementierungsaufwand zum Einstellen der Soll-Ausgangsspannung gering, da ein Schwellwert zwei Funktionen erfüllt.

Weitere Vorteile und vorteilhafte Ausgestaltungen der Erfindung ergeben sich aus der folgenden Beschreibung von bevorzugten Beispielen und Ausführungsbeispielen unter Bezugnahme auf die beigefügten Zeichnungen. Es zeigen:
- Fig. 1: eine schematische Prinzipdarstellung von Komponenten eines Kraftfahrzeugs,
- Fig. 2: einen Verlauf eines Signals zum Einstellen der Soll-Ausgangsspannung des Generators in Abhängigkeit von Signalverläufen des Ansteuersignals des Lüfters und eines Drucks eines Kältemittels,
- Fig. 3: einen Verlauf eines Ladesignals zum Laden einer Batterie des Kraftfahrzeugs und
- Fig. 4: einen Verlauf des Signals zum Einstellen der Soll-Ausgangsspannung des Generators zusätzlich in Abhängigkeit von einem Verlauf einer Außentemperatur.

Im Folgenden werden für gleiche oder gleichwirkende Elemente durchweg gleiche Bezugszeichen verwendet.

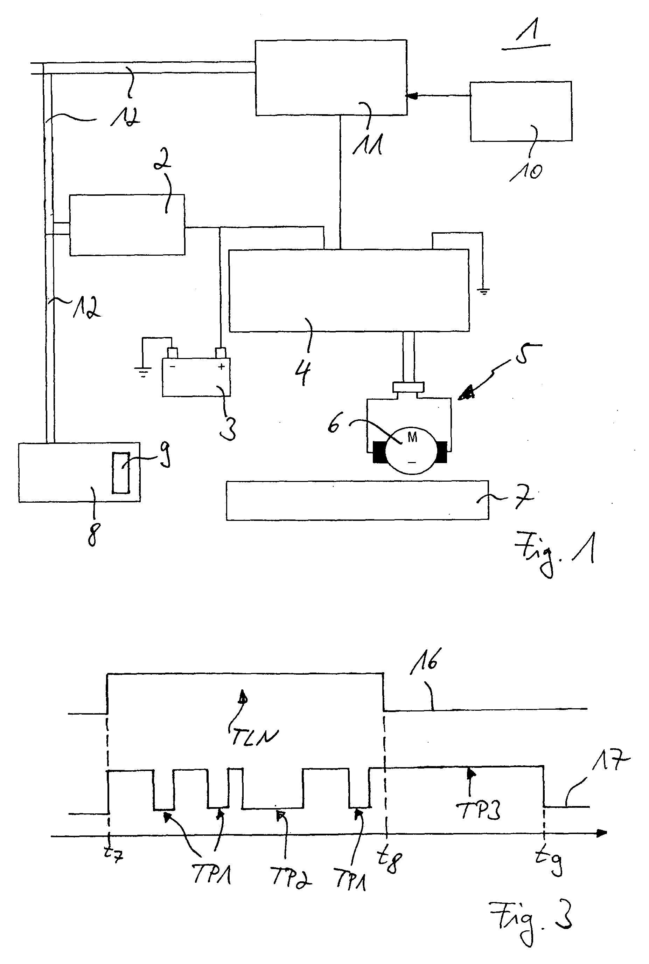

Fig. 1 zeigt eine schematische Prinzipdarstellung von Komponenten eines Kraftfahrzeugs 1. Das Kraftfahrzeug 1 enthält einen Generator 2, der mit einer Batterie 3 verbunden ist. Der Generator 2 und die Batterie 3 sind mit einer Lüfter-Steuereinrichtung 4 zum Ansteuern eines Lüfters 5 verbunden. Der Lüfter 5 hat einen Gleichstrommotor 6 und dient zum Kühlen eines Motors 7, insbesondere eines Verbrennungsmotors, zum Antreiben des Kraftfahrzeugs 1. Das Kraftfahrzeug 1 enthält ferner eine Klimaanlage 8, die insbesondere zum Klimatisieren eines Passagierinnenraums des Kraftfahrzeugs 1 dient. Zum Betreiben der Klimaanlage 8 wird ein Kältemittel verwendet, dessen Druck in Abhängigkeit von Betriebsbedingungen und Bedingungen außerhalb des Kraftfahrzeugs 1, vor allem einer Außentemperatur, veränderlich ist. Zum Bestimmen des Drucks des Kältemittels ist ein Drucksensor 9 vorgesehen. Die Kenntnis der außerhalb des Kraftfahrzeugs 1 herrschenden Außentemperatur ist hier insbesondere für das Einstellen des Lüfters 5 und der Klimaanlage 8 relevant. Das Kraftfahrzeug 1 enthält daher eine Messeinrichtung 10 zum Messen der Außentemperatur. Die Messeinrichtung 10 ist mit einer Steuereinrichtung 11 verbunden, die zum Steuern der Funktionsweisen und Abläufe der verschiedenen Komponenten des Kraftfahrzeugs 1 dient. Die Steuereinrichtung 11 erhält von der Messeinrichtung 10 eine Information über die Außentemperatur. Die Steuereinrichtung 11 ist über einen Bus 12 mit dem Generator 2, der Klimaanlage 8 und weiteren nicht dargestellten Komponenten des Kraftfahrzeugs 1 verbunden. Ferner ist die Steuereinrichung 11 mit der Lüfter-Steuereinrichtung 4 verbunden.

Die Lüfter-Steuereinrichtung 4 erhält von der Steuereinrichtung 11 ein Ansteuersignal zum Ansteuern des Lüfters 5. Dieses Ansteuersignal gibt vor, mit welcher Leistung der Lüfter 5 zum Kühlen des Motors 7 betrieben werden soll. Die Lüfter-Steuereinrichtung 4 bereitet das Ansteuersignal in geeigneter Weise für die Ansteuerung des Lüfters 5 auf und steuert diesen dann entsprechend an. Die Lüfter-Steuereinrichtung 4 enthält elektronische Bauelemente, die von dem Generator 2 mit Spannung versorgt werden. Der Generator 2 liefert daher an seinem Ausgang eine Ausgangsspannung an die Lüfter-Steuereinrichtung 4. Da der Ausgang des Generators 2 mit dem Pluspol der Batterie 3 verbunden ist, liefert der Generator 2 seine Ausgangsspannung auch an die Batterie 3. Dadurch fließt ein Strom von dem Generator 2 zu der Batterie 3, der zum Aufladen der Batterie 3 dient. Der Generator 2 erhält über den Bus 12 von der Steuereinrichtung 11 ein Ansteuersignal mit einer Soll-Ausgangsspannung, die eine Vorgabe zum Einstellen der Ausgangsspannung am Ausgang des Generators 2 darstellt. Im vorliegenden Ausführungsbeispiel wird nicht überprüft, ob die am Ausgang des Generators 2 tatsächlich ausgegebene Ausgangsspannung der Soll-Ausgangsspannung entspricht. Es ist aber möglich, eine solche Überprüfung und eine geeignete Regelung für die tatsächliche Ausgangsspannung einzurichten.

Erfindungsgemäß erfolgt das Einstellen der Soll-Ausgangsspannung durch die Steuereinrichtung 11 in Abhängigkeit von dem Ansteuersignal für den Lüfter 5. Dazu ist der Steuereinrichtung 11 ein Schwellwert B1 für die Soll-Ausgangsspannung des Generators 2 vorgegeben. Die Steuereinrichtung 11 überprüft, ob die von ihr vorgegebene Soll-Ausgangsspannung für den Generator 2 diesen Schwellwert B1 überschreitet, oder nicht. Der Steuereinrichtung 11 ist ferner ein Schwellwert P1 für das Ansteuersignal des Lüfters 5 vorgegeben. Der Schwellwert P1 ist parametrierbar und somit abhängig von bestimmten Vorgaben einstellbar. Die Steuereinrichtung 11 überprüft, ob das Ansteuersignal für den Lüfter 5 den Schwellwert P1 erreicht, oder nicht. Im vorliegenden Ausführungsbeispiel überprüft die Steuereinrichtung 11 zudem, ob das Ansteuersignal die Schwelle P1 in einer ansteigenden Signalphase erreicht, d. h. von einem niedrigeren Wert her kommend, oder in einer abfallenden Signalphase, d. h. von einem höheren Wert her kommend. Der Steuereinrichtung 11 ist des Weiteren ein Schwellwert P2 für einen bestimmten Druck des Kältemittels der Klimaanlage 8 vorgegeben. Der Schwellwert P2 ist parametrierbar und somit abhängig von bestimmten Vorgaben einstellbar. Die Steuereinrichtung 11 überprüft, ob der von dem Drucksensor 9 erfasste Druck des Kältemittels den Schwellwert P2 überschreitet, oder nicht. Abhängig von den Überprüfungen des Steuermittels 11 in Bezug auf die Schwellwerte B1, P1 und P2 wird die Soll-Ausgangsspannung des Generators 2 eingestellt.

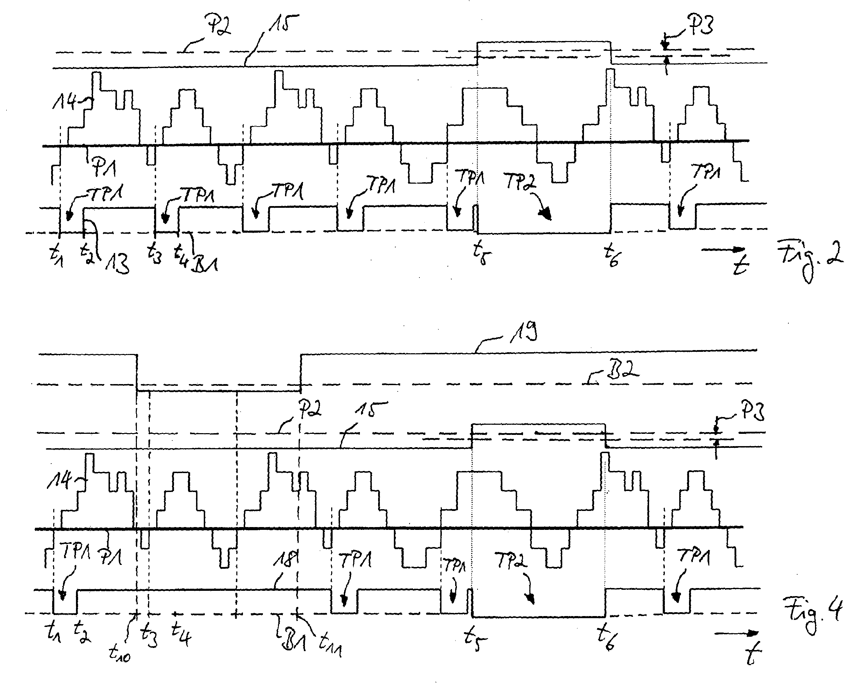

Fig. 2 zeigt einen zeitlichen Verlauf eines Signals 13 der Soll-Ausgangsspannung des Generators 2 in Abhängigkeit von einem zeitlichen Verlauf eines Ansteuersignals 14 des Lüfters 5 und einem zeitlichen Verlauf eines Drucksignals 15 für den Druck in dem Kältemittel der Klimaanlage 8. Die Fig. 2 zeigt ferner die Schwellwerte B1, P1 und P2. Die Verläufe der in der Fig. 2 dargestellten Signale können in dem Kraftfahrzeug 2, insbesondere nach seinem Start, auftreten. Die Batterie 3 hat zum Starten des Kraftfahrzeugs 1 Energie abgegeben und soll mittels des Generators 2 wieder aufgeladen werden. Dazu wird von dem Generator 2 vorteilhafterweise eine hohe Ausgangsspannung ausgegeben, so dass die Batterie 3 mittels eines hohen Stroms schnell aufgeladen werden kann.

Gemäß der Darstellung in Fig. 2 ist das dem Generator 2 von der Steuereinrichtung 11 übermittelte Signal 13 zu Beginn auf einem hohen Pegel und liegt über dem Schwellwert B1. Dies bedeutet, dass dem Generator 2 von der Steuereinrichtung 11 eine hohe Soll-Ausgangsspannung vorgegeben wird. Diese hohe Soll-Ausgangsspannung kann beispielsweise 15V betragen. Das Ansteuersignal 14 für den Lüfter 5 liegt zu Beginn unterhalb des Schwellwerts P1 und befindet sich in einer ansteigenden Phase. Das Ansteuersignal 14 gibt hier die Leistung des Lüfters 5 vor. Das Drucksignal 15 liegt zu Beginn unterhalb des Schwellwerts P2. D. h., der Druck in dem Kältemittel liegt unterhalb des durch den Schwellwert P2 vorgegebenen kritischen Werts, der beispielsweise 20 bar beträgt. Zu einem Zeitpunkt t1 erreicht das Ansteuersignal 14 in einer ansteigenden Signalphase den Schwellwert P1. Der Schwellwert P1 beträgt hier beispielsweise 70% der von dem Lüfter 5 abgebbaren maximalen Leistung. Von dem Lüfter 5 wird in der ansteigenden Signalphase gefordert, seine Leistungabgabe zu vergrößern, um stärker zu kühlen. Das Erreichen des Schwellwerts P1 wird von der Steuereinrichtung 11 erkannt. Daraufhin veranlasst sie ein Absenken der Ausgangsspannung des Generators 2, indem sie ein Absenken der Soll-Ausgangsspannung durch ein entsprechendes Ändern des Signals 13 steuert. Zum Zeitpunkt t1 wird das Signal 13 auf den Wert des Schwellwerts B1 abgesenkt. Der Wert des Schwellwerts B1 beträgt beispielsweise 14,3V. Es ist ebenfalls möglich, das Signal 13 auf einen anderen Wert als denjenigen des Schwellwerts B1 abzusenken. Das Absenken der Soll-Ausgangsspannung aufgrund des Erreichens des Schwellwerts B1 durch das ansteigende Ansteuersignal 14 erfolgt für eine vorgegebene Zeitdauer TP1. Die Zeitdauer TP1 beträgt beispielsweise 20s. Während der Zeitdauer TP1 bleibt die Soll-Ausgangsspannung unabhängig von dem weiteren Verlauf des Ansteuersignals 14 auf den Schwellwert B1 eingestellt. Im vorliegenden Ausführungsbeispiel steigt das Ansteuersignal 14 während der Zeitdauer TP1 stufenförmig weiter an. Zu einem Zeitpunkt t2 ist die Zeitdauer TP1 abgelaufen und das Signal 13 wird erneut auf den hohen Pegel eingestellt. Dies erfolgt unabhängig von der Höhe des Ansteuersignals 14, das zu dem Zeitpunkt t2 über dem Schwellwert P1 liegt. In dieser Situation wird der Lüfter 5 mit einer sehr hohen Leistung betrieben, so dass er einen großen Strom zieht. Dadurch wird durch den Lüfter 5 selbst ein Begrenzen der tatsächlichen Ausgangsspannung des Generators 2 bewirkt. Das Ansteuersignal 14 verläuft stufenförmig an- und absteigend, fällt schließlich erneut in einer abfallenden Signalphase unter den Schwellwert P1, kehrt sich dann wieder in eine ansteigende Signalphase um und erreicht zu einem Zeitpunkt t3 erneut den Schwellwert P1. Zum Zeitpunkt t3 wird das Signal 13 daher erneut für eine weitere Zeitdauer TP1 auf den niedrigen Pegel des Schwellwerts B1 abgesenkt. Zu einem Zeitpunkt t4 nach Ablauf der Zeitdauer TP1 wird das Signal 13 wieder freigegeben und kann sich auf seinen hohen Pegel einstellen. Dieser Ablauf des Absenkens und Anhebens des Signals 13 erfolgt gemäß Fig. 2 weitere viermal.

Zu einem Zeitpunkt t5 befindet sich das Signal 13 auf seinem hohen Pegel, das Ansteuersignal 14 liegt über dem Schwellwert P1 und das Drucksignal 15 überschreitet den Schwellwert P2. Dies bedeutet, dass der Druck im Kältemittel der Klimaanlage 8 einen kritischen Wert erreicht hat. Zur Sicherheit wird daher zum Zeitpunkt t5 das Signal 13 unabhängig vom Ansteuersignal 14 auf den niedrigen Pegel des Schwellwerts B1 abgesenkt. Der Druck des Kältemittels wird durch den Drucksensor 9 weiter ermittelt und von der Steuereinrichtung 11 weiter überprüft. Das Signal 13 verbleibt solange auf seinem niedrigen Pegel, bis der Druck des Kältemittels wieder unter den Schwellwert P2 und eine zusätzliche Sicherheitsreserve P3, die beispielsweise 2 bar beträgt, fällt. Dies ist im vorliegenden Ausführungsbeispiel in einem Zeitpunkt t6 der Fall. Zum Zeitpunkt t6 wird das Signal 13 daher wieder auf den hohen Pegel erhöht. Eine Zeitdauer TP2, während der das Signal 13 aufgrund des hohen Drucks des Kältemittels abgesenkt wird, wird bestimmt.

Die Steuereinrichtung 11 ist so ausgestaltet, dass sie die verschiedenen Zeitdauern TP1 und TP2, während der das Signal 13 abgesenkt wird, zu einer Zeitdauer TP3 aufsummiert. Die Steuereinrichtung 11 verwendet die Zeitdauer TP3 vorteilhafterweise dazu, eine Ladedauer zum Aufladen der Batterie 3 gegenüber einer normalen Ladedauer ohne Absenken der Soll-Ausgangsspannung des Generators 2 zu verlängern. Durch das Absenken der Soll-Ausgangsspannung des Generators 2 steht der Batterie während der Zeitdauern TP1 und TP2 nicht der der normalen Ladedauer zugrunde liegende hohe Pegel der Soll-Ausgangsspannung zur Verfügung. Dadurch fließt auch nur ein reduzierter Strom in die Batterie 3, so dass diese langsamer aufgeladen wird. Um dies auszugleichen, wird die Ladedauer von der Steuereinrichtung 11 um die Zeitdauer TP3 verlängert, während der sich das Signal 13 auf seinem hohen Pegel befindet.

Dies ist beispielhaft in der Fig. 3 dargestellt, die einen Verlauf eines Ladesignals 16 zum Laden der Batterie 3 des Kraftfahrzeugs 1 darstellt. Dem Ladesignal 16 liegt eine Situation für eine bestimmte Zeit von beispielsweise 30 Minuten nach einem Starten des Kraftfahrzeugs 1 zugrunde, bei dem die Batterie 3 einen großen Teil ihrer abgespeicherten Energie zum Starten abgegeben hat. Das erneute Aufladen der Batterie 3 erfolgt in der dem Signal 16 zugrunde liegenden Situation mittels der dem Generator 2 vorgegebenen Soll-Ausgangsspannung, die während des gesamten Ladevorgangs auf ihrem hohen Pegel liegt. Es erfolgt kein Absenken der Soll-Ausgangsspannung des Generators 2. Unmittelbar nach dem Starten wird zu einem Zeitpunkt t7 der Ladevorgang begonnen. Das Laden mittels des hohen Pegels der Soll-Ausgangsspannung erfolgt dann für eine normale Ladedauer TLN. Anschließend wird zu einem Zeitpunkt t8 der Ladevorgang beendet, da die Batterie 3 ihren vollen Ladezustand wieder erreicht hat.

Die Fig. 3 stellt ferner ein Signal 17 dar, dem eine Situation zugrunde liegt, in der das erneute Aufladen der Batterie 3 durch mehrfache Absenkungen der Soll-Ausgangsspannung verzögert wird. In der Fig. 3 sind solche, während der Zeitdauern TP1 und TP2 vorgenommenen Absenkung dargestellt. Im Gegensatz zum Signal 16 wird bei dem Signal 17 zum Zeitpunkt t8 der Ladevorgang der Batterie 3 nicht beendet. Das Signal 17 bleibt vielmehr weiterhin auf seinem hohen Pegel. Die Ladezeit gemäß des Signals 17 wird um die von der Steuereinrichtung 11 bestimmte Zeitdauer TP3 verlängert. Die Zeitdauer TP3 beginnt in dem Zeitpunkt t8 und endet in einem Zeitpunkt t9, in dem beim Signal 17 der Ladevorgang beendet wird. Idealerweise geben die Signale 16 und 17 Signale für die Soll-Ausgangsspanung des Generators 2 wieder.

Fig. 4 zeigt einen zeitlichen Verlauf eines Signals 18 zum Einstellen der Soll-Ausgangsspannung des Generators 2. Das Signal 18 wird, wie das Signal 13 aus Fig. 2, in Abhängigkeit von dem zeitlichen Verlauf des Ansteuersignals 14 des Lüfters 5 und dem zeitlichen Verlauf des Drucksignals 15 für den Druck in dem Kältemittel der Klimaanlage 8 eingestellt. Die Signale 14 und 15 sowie die Schwellwerte B1, P1, P2 und P3 entsprechen denjenigen der Fig. 2. Im Ausführungsbeispiel nach Fig. 4 wird die Soll-Ausgangsspannung nach Signal 18 zusätzlich in Abhängigkeit von einer Außentemperatur außerhalb des Kraftfahrzeugs 1 eingestellt. Der zeitliche Verlauf der Außentemperatur ist in der Fig. 4 in einem Signal 19 dargestellt. Für die Außentemperatur ist ein Schwellwert B2 vorgegeben, der beispielsweise bei 15°C liegt. Mittels der Messeinrichtung 10 wird die Außentemperatur bestimmt und an die Steuereinrichtung 11 übermittelt. Diese stellt fest, ob die Außentemperatur den Schwellwert B2 unterschreitet, oder nicht. Unterschreitet die Außentemperatur den Schwellwert B2, so wird die Soll-Ausgangsspannung für den Generator 2 auch dann nicht abgesenkt, wenn es aufgrund des Verlaufs des Ansteuersignals 14 erforderlich wäre. Wie in der Fig. 4 dargestellt, liegt die Außentemperatur gemäß des Signals 19 zu Beginn über dem Schwellwert B2. Wie im Ausführungsbeispiel nach Fig. 2, wird daher auch hier die Soll-Ausgangsspannung, wie im Signal 18 gezeigt, zum Zeitpunkt t1 für die Zeitdauer TP1 abgesenkt. Zu einem Zeitpunkt t10, der zeitlich nach dem Zeitpunkt t2, aber vor dem Zeitpunkt t3 liegt, sinkt die Außentemperatur unter den Schwellwert B2. Zu dem Zeitpunkt t3, in dem die Außentemperatur unter dem Schwellwert B2 liegt und zu dem also aufgrund des Ansteuersignals 14 die Soll-Ausgangsspannung abgesenkt werden müsste, erfolgt hier kein Absenken der Soll-Ausgangsspannung. Gleiches gilt für den in der Fig. 2 nicht näher bezeichneten, nach dem Zeitpunkt t4 liegenden, nächsten Absenkvorgang. Auch dieser wird im Ausführungsbeispiel nach Fig. 4 nicht durchgeführt. Zu einem Zeitpunkt t11 erhöht sich die Außentemperatur erneut und liegt über dem Schwellwert B2. Die Soll-Ausgangsspannung wird, wie in Fig. 2, hier noch dreimal aufgrund des Verlaufs des Ansteuersignals 14 abgesenkt. Zwischen dem letzten und vorletzten Absenken aufgrund des Verlaufs des Ansteuersignals 14 wird die Soll-Ausgangsspannung zwischen den Zeitpunkten t5 und t6 aufgrund des erhöhten Drucks im Kältemittel abgesenkt.

## Patentansprüche

1. Verfahren zum Einstellen einer Soll-Ausgangsspannung eines in einem Kraftfahrzeug (1) angeordneten Generators (2), wobei die Soll-Ausgangsspannung des Generators (2) abgesenkt wird, sofern sie einen vorgegebenen ersten Schwellwert (B1) überschreitet und ein Ansteuersignal (14) für einen Lüfter (5) zum Kühlen eines Motors des Kraftfahrzeugs (1) einen zweiten Schwellwert (P1) erreicht oder überschreitet.

2. Verfahren nach Anspruch 1, **dadurch gekennzeichnet, dass** eine Außentemperatur bestimmt und die Soll-Ausgangsspannung nur abgesenkt wird, falls die Außentemperatur einen vorgegebenen dritten Schwellwert (B2) erreicht oder überschreitet.

3. Verfahren nach Anspruch 1 oder 2, **dadurch gekennzeichnet, dass** die Soll-Ausgangsspannung nur abgesenkt wird, falls das Ansteuersignal für den Lüfter (5) bei seinem Ansteigen den zweiten Schwellwert (P1) erreicht oder überschreitet.

4. Verfahren nach einem der vorhergehenden Ansprüche, **dadurch gekennzeichnet, dass** die Soll-Ausgangsspannung für eine vorgegebene erste Zeitdauer (TP1) abgesenkt wird.

5. Verfahren nach einem der vorhergehenden Ansprüche, **dadurch gekennzeichnet, dass** ein Druck eines Kältemittels für eine Klimatisierungseinrichtung (8) des Kraftfahrzeugs (1) bestimmt und die Soll-Ausgangsspannung abgesenkt wird, sofern der bestimmte Druck einen vorgegebenen vierten Schwellwert (P2) erreicht oder überschreitet.

6. Verfahren nach Anspruch 5, **dadurch gekennzeichnet, dass** die Soll-Ausgangsspannung so lange abgesenkt wird, bis der Druck des Kältemittels einen vorgegebenen fünften Schwellwert (P3) erreicht oder unterschreitet.

7. Verfahren nach Anspruch 6, **dadurch gekennzeichnet, dass** der fünfte Schwellwert (P3) niedriger ist, als der vierte Schwellwert (P2).

8. Verfahren nach einem der Ansprüche 5-7, **dadurch gekennzeichnet, dass** eine zweite Zeit (TP2) bestimmt wird, in der die Soll-Ausgangsspannung in Abhängigkeit von dem bestimmten Druck abgesenkt wird.

9. Verfahren nach einem der vorhergehenden Ansprüche, **dadurch gekennzeichnet, dass** Zeiten (TP1, TP2), in denen die Soll-Ausgangsspannung des Generators (2) abgesenkt wird, aufsummiert werden und eine Ladedauer zum Aufladen einer Batterie (3) des Kraftfahrzeugs (1) in Abhängigkeit von diesen aufsummierten Zeiten verlängert wird.

10. Verfahren nach einem der vorhergehenden Ansprüche, **dadurch gekennzeichnet, dass** die Soll-Ausgangsspannung des Generators (2) bei ihrem Absenken auf den ersten Schwellwert (B1) abgesenkt wird.

11. Vorrichtung (11) zum Einstellen einer Soll-Ausgangsspannung eines in einem Kraftfahrzeug (1) angeordneten Generators (2), wobei die Vorrichtung (11) so ausgestaltet ist, dass sie die Soll-Ausgangsspannung des Generators (2) absenkt, sofern diese einen vorgegebenen ersten Schwellwert (B1) überschreitet und zusätzlich ein Ansteuersignal für einen Lüfter (5) zum Kühlen eines Motors des Kraftfahrzeugs (1) einen zweiten Schwellwert (P1) erreicht oder überschreitet.
